# EUROPÄISCHE PATENTSCHRIFT

(11) **EP 1 018 460 B1**
(45) Veröffentlichungstag und Bekanntmachung des Hinweises auf die Patenterteilung: **24.04.2002**
(21) Anmeldenummer: 99122380.1
(22) Anmeldetag: 10.11.1999
(51) Int. Cl.: B60T 17/02, B60T 8/24

(54) **Mehrkreisschutzventil für Druckluftbeschaffungsanlagen von Kraftfahrzeugen**
Multi-circuit protection valve for compressed air production installations in vehicles
Valve de protection pour plusieurs circuits pour installations de production d'air comprimé dans des véhicules

(30) Priorität: 24.11.1998 DE 19854205
(43) Veröffentlichungstag der Anmeldung: 12.07.2000
(73) Patentinhaber: Haldex Brake Products GmbH, 69123 Heidelberg (DE)
(72) Erfinder: Blanz, Roland, 69253 Heiligkreuzsteinach (DE)
(74) Vertreter: Patentanwälte Rehberg + Hüppe

(56) Entgegenhaltungen:
- EP-A- 0 096 523
- DE-A- 4 421 575
- DE-C- 19 710 814

## Beschreibung

Die Erfindung bezieht sich auf ein Mehrkreisschutzventil für Druckluftbeschaffungsanlagen von Kraftfahrzeugen, mit den im Oberbegriff des Anspruches 1 genannten Merkmalen. Ein solches Mehrkreisschutzventil kann als singuläres Anlagenteil eingesetzt werden, läßt aber auch die Integration in andere Bauteile zu, beispielsweise in einen Druckregler, der auch mit einem Trockner ausgestattet sein kann und der beispielsweise einen elektropneumatisch ausgebildeten Druckregler und oder einen pneumatisch ausgebildeten Druckregler aufweist.

Ein solches Mehrkreisschutzventil, integriert in einen Druckregler, ist aus der DE 44 21 575 bekannt. Am Gehäuse des Druckreglers, welches gleichzeitig das Gehäuse des Mehrkreisschutzventiles bildet, ist ein Eingangsanschluß für die vom Kompressor herangeführte Druckluft vorgesehen. Das Gehäuse weist einen Auslaß auf, der über ein gesteuertes Auslaßventil in dessen Offenstellung mit der Atmosphäre verbindbar ist. Das gemeinsame Gehäuse des Druckreglers und des Mehrkreisschutzventiles weist einen Durchtrittsraum für die Druckluft mit einem nachgeschalteten Rückschlagventil auf. Es versteht sich, daß bei einem solchen Druckregler eine Einrichtung zum abwechselnden Öffnen und Schließen des Auslaßventiles vorgesehen ist. Das integrierte Mehrkreisschutzventil besitzt mehrere gleichartige Steuereinheiten, die den einzelnen Kreisen zugeordnet sind. Jede Steuereinheit weist, zugeordnet zu je einem Kreis, eine Betätigungseinheit und einen Drucksensor auf. Zu jeder Steuereinheit gehört schließlich noch eine elektronische Steuereinrichtung, die jedoch zu einer gemeinsamen Einheit für alle Mehrkreisschutzventile und im übrigen auch zur Steuerung des Druckreglers zusammengefaßt ist. Jede solche Steuereinheit besitzt schließlich eine Betätigungseinheit, die aus einem Magnetventil und einem Kolben mit Stößel besteht, wobei der dem Kolben zugeordnete Wirkraum über das Magnetventil mit Druckluft beaufschlagbar ist, die aus dem Durchströmraum abgerufen wird. Jeder Kreis besitzt ein Überströmventil, das ein Ventilglied aufweist, welche mit einem Ventilsitz ein Durchlaßventil für die Druckluft zu einem dem jeweiligen Kreis zugeordneten Luftverbraucher, insbesondere Druckluftbehälter, bildet. Das Ventilglied ist abströmseitig auf einer Feder abgestützt, die am Gehäuse gelagert ist und deren Kraft einstellbar ausgebildet sein kann. Der Stößel des Kolbens der Betätigungseinheit arbeitet mit dem Ventilglied zusammen, und zwar derart, daß bei Beaufschlagung der Wirkfläche des Kolbens der Stößel an dem Ventilglied anschlägt und dieses dann in die Offenstellung überführt, so daß das Durchlaßventil geöffnet wird. Damit strömt Druckluft, die vom Druckregler gesteuert dem Mehrkreisschutzventil zugeführt wird, in den betreffenden Kreis, also zu dem entsprechenden Luftverbraucher bzw. Druckluftvorratsbehälter. Um jeden Kreis gegenüber einem möglichst hohen Öffnungsdruck (ohne Betätigung der Betätigungseinheit) abzusichern, ist es erforderlich, die Kraft der Feder, auf der das Ventilglied abgestützt ist, relativ groß zu wählen, damit das betreffende Überströmventil bei sich erhöhendem Druck in dem Durchströmraum des Mehrkreisschutzventils erst zu einem vergleichsweise späten Zeitpunkt öffnet. Andererseits muß die Betätigungseinheit bei Betätigung in der Lage sein, das Durchlaßventil zu öffnen. Dies bedeutet, daß die vom anstehenden Druck über das Magnetventil beaufschlagbare Wirkfläche des Kolbens der Betätigungseinheit so groß gestaltet werden muß, daß die auf diese Weise erzielbare Kraft, die über den Stößel auf das Ventilglied des Überströmventils übertragen wird, ausreicht, um das Durchlaßventil am Überströmventil zu öffnen, also das Ventilglied von seinem Sitz abzuheben. Dies bedeutet, daß die Fläche des Kolbens mit größer werdender Kraft der Feder ebenfalls vergrößert werden muß. Hier sind konstruktive Grenzen gesetzt, da jeder Kreis an einem solchen Mehrkreisschutzventil über ein Überströmventil mit zugeordneter Betätigungseinheit verfügen muß. Unter Umständen sind drei oder vier oder sogar mehr auf diese Art und Weise abgesicherte Kreise unterzubringen. Die Kraft der Feder kann deshalb beispielsweise einem abgesicherten Druck von 7 bar entsprechen. Damit wird die Kreisdrucksicherung im Mehrkreisschutzventil verwirklicht. Im Sinne eines Sicherheitsventils ist damit sichergestellt, daß auch bei einem Defekt in einem der Kreise ein Notbetrieb mit dem abgesicherten Druck von 7 bar aufrechterhalten werden kann. Die intakten Kreise können also mit dem abgesicherten Druck von 7 bar auch weiterhin versorgt werden.

Der Erfindung liegt die Aufgabe zugrunde, ein Mehrkreisschutzventil der eingangs beschriebenen Art zu schaffen, bei dem bei Auftreten eines Defektes in einem der Kreise eine vergleichsweise höhere Kreisdrucksicherung als im Stand der Technik möglich ist und trotzdem eine Betätigungseinheit einsetzbar ist, deren Wirkfläche klein dimensioniert werden kann, wie es für die Unterbringung mehrerer dieser Einheiten in einem Mehrkreisschutzventil erforderlich ist. Es wird also angestrebt, ein Mehrkreisschutzventil zu schaffen, bei dem bei Auftreten eines Defektes in einem Kreise die intakten Kreise mit einem vergleichsweise höheren Druck als die im Stand der Technik bekannten 7 bar nachgefüllt werden können.

Erfindungsgemäß wird dies bei einem Mehrkreisschutzventil der eingangs beschriebenen Art dadurch erreicht, daß das Ventilglied jedes Überströmventils als Differentialkolben mit Kolbendichtung ausgebildet ist, daß die von der zugeführten Druckluft beaufschlagte Wirkfläche auf der der Feder abgekehrten Seite des Ventilglieds durch die Kolbendichtung in eine Teilwirkfläche reduziert ist, und das die Kraft der Feder entsprechend den gewünschten Öffnungsdruck auf diese reduzierte Teilwirkfläche dimensioniert ist.

Die Erfindung geht grundlegend von dem Gedanken aus, als Ventilglied nicht mehr eine Ventilplatte, wie im Stand der Technik, sondern einen Differentialkolben einzusetzen. Unter einem Differentialkolben wird ein Kolben, also ein Element mit Kolbendichtung, verstanden, wobei die Kolbendichtung zusätzlich zu dem Ventilsitz auf der einen Seite des Ventilgliedes vorgesehen ist. Der Durchmesser der Kolbendichtung ist frei wählbar, so daß durch entsprechende Gestaltung die Wirkfläche, die im Stand der Technik von dem zu dem Überströmventil herangeführten Vorratsdruck beaufschlagt wird, vorteilhaft zu einer Teilwirkfläche reduziert wird. Es versteht sich, daß die Teilwirkfläche immer kleiner ist als die volle Wirkfläche im Stand der Technik. Somit wird erreicht, daß auch im Falle der Nichtbetätigung des Überströmventils durch die Betätigungseinheit der zum Überströmventil herangeführte Druck nunmehr nur noch die reduzierte Teilwirkfläche beaufschlagt und damit eine reduzierte Öffnungskraft am Ventilglied des Überströmventils verursacht. Infolgedessen ergibt sich auch die Möglichkeit, die Kraft der Feder, auf der das Ventilglied des Überströmventils abgestützt ist, jetzt nur noch auf die Größe der insoweit reduzierten Teilwirkfläche abzustimmen. Dies bedeutet, daß die Kraft der Feder relativ niedrig gewählt werden kann. Je kleiner die Teilwirkfläche ausgebildet wird, desto niedriger kann die Kraft der Feder bemessen werden. Freilich muß die Kraft der Feder noch so groß sein, daß verläßlich die Schließfunktion des als Differentialkolben ausgebildeten Ventilgliedes des Überströmventils erreicht wird und daß auch Reibkräfte bei der Bewegung der Teile relativ zueinander überwunden werden. Durch die flächenmäßige Reduzierung der vom herangeführten Druck beaufschlagten Fläche, also durch die Umwandlung der Wirkfläche in eine Teilwirkfläche, ist es ohne weiteres möglich, den Kreissicherungsdruck von den im Stand der Technik bekannten 7 bar auf z. B. 10 bar anzuheben. Damit ergibt sich der Vorteil, daß über die intakten Kreise im Defektfall vergleichsweise größere Wirkungen, insbesondere Bremswirkungen, erzielt werden können. Die Anwendung des Differentialkolbens als Ventilglied des Überströmventils eröffnet auch die Möglichkeit, die durch die Kolbendichtung reduzierte Teilwirkfläche sehr klein zu gestalten. Dies bedeutet, daß die Kraft der Feder ebenfalls sehr klein gewählt werden kann. Das bedeutet weiterhin, daß unter Umständen auf die Einstellbarkeit der Kraft der Feder verzichtet werden kann. Bei intakter Anlage, also ohne Defekt, wirkt sich außerdem der Vorteil aus, daß über die Betätigungseinheit das als Differentialkolben ausgebildete Ventilglied des Überströmventils sehr früh und schnell geöffnet werden kann. Die Befüllung der einzelnen Kreise beginnt also vergleichsweise früher. Sinnvoll kann es sein, wenn die reduzierte Teilwirkfläche die einzige Wirkfläche des Differentialkolbens auf dieser Seite ist, die sich kraftmäßig auswirkt.

Die Ausbildung kann auch so getroffen sein, daß die Wirkfläche auf der der Feder abgekehrten Seite durch die Kolbendichtung in die erste reduzierte Teilwirkfläche, die von der dem Mehrkreisschutzventil von der zugeführten Druckluft beaufschlagt wird, und eine zweite von der dem Luftverbraucher zugeführten Druckluft beaufschlagten Teilwirkfläche unterteilt wird. Dabei ist dann diese zweite Teilwirkfläche mit der Abströmseite verbunden oder anders gesagt, der Differentialkolben ist hinsichtlich der zweiten Teilwirkfläche druckentlastet ausgebildet.

Der Differentialkolben weist ansonsten auf der der Feder abgekehrten Seite eine Dichtfläche auf, die mit einem Gehäuserand das Durchlaßventil bildet. Der Differentialkolben besitzt auf der der Feder abgekehrten Seite einen Fortsatz, auf dem die Kolbendichtung angeordnet ist. Der Differentialkolben kann ein oder mehrstückig ausgebildet sein. Wenn er eine zweite Teilwirkfläche aufweist, besitzt er auch eine Durchbrechung für die Druckentlastung der zweiten Teilwirkfläche. Dabei ist die Möglichkeit gegeben, daß die gesamte Wirkfläche auf der der Feder abgekehrten Seite durch die Kolbendichtung in die beiden genannten Teilwirkflächen unterteilt wird. Es ist aber auch möglich, durch Anordnung weiterer Dichtungen auch mehr als die zwei beschriebenen Teilwirkflächen auf der der Feder abgekehrten Seite anzuordnen, um die Größen der Flächen unabhängig voneinander zu gestalten. Nicht jede dieser Teilwirkflächen muß unbedingt eine Funktion ausüben.

Weiterhin besteht die Möglichkeit, daß der Differentialkolben und zumindest der Stößel der Betätigungseinheit baulich vereinigt sind, wobei die Kolbendichtung des Differentialkolbens auf dem Stößel der Betätigungseinheit angeordnet ist. Damit tritt eine bauliche Vereinfachung und Integration zwischen Differentialkolben und zumindest dem Stößel der Betätigungseinheit ein. Auch der Kolben der Betätigungseinheit kann in diese Integration einbezogen sein.

In aller Regel wird die zweite Teilwirkfläche, wenn sie vorhanden ist, größer als die erste Teilwirkfläche ausgebildet sein.

Für die vorliegende Erfindung ist an sich die Kleinheit der reduzierten Teilwirkfläche bedeutungsvoll.

Für die Ausbildung der Betätigungseinheit gibt es verschiedene Möglichkeiten. Diese kann, wie im Stand der Technik bekannt, aus einem einzigen Kolben mit Stößel bestehen, dem ein Magnetventil für die Beaufschlagung der Wirkfläche des Kolbens zugeordnet ist. Es ist aber auch möglich, daß die Betätigungseinheit zusätzlich einen zweiten Kolben aufweist, der gleichsinnig zum ersten Kolben angeordnet ist. Dabei ist es dann möglich, den ersten Kolben beispielsweise über das Magnetventil elektropneumatisch anzusteuern, während der zweite Kolben über den mechanischen Druckregler angesteuert wird.

Der Differentialkolben kann eine zentrische Bohrung aufweisen, wobei der Stößel der Betätigungseinheit in die Bohrung einragt und mit einer Dichtung dort verschiebbar gelagert ist. Es versteht sich, daß der Stößel an dem Ventilglied des Überströmventils anschlägt bzw. dort ein Anschlag vorgesehen ist, damit die betreffende Kraft von der Betätigungseinheit auf den Differentialkolben des Überströmventils übertragen werden kann, wie es für eine Öffnung des Durchlaßventils erforderlich ist.

Der Fortsatz des Differentialkolbens kann im Anschluß an die Bohrung eine radiale Durchbrechung aufweisen, die in dauernder Verbindung zu der ersten Teilwirkfläche steht. Auf diese Weise ist es möglich, zwischen dem Stößel der Betätigungseinheit und dem Differentialkolben ein zweites Durchlaßventil zu schaffen. Das erste Durchlaßventil zwischen der Dichtfläche und dem Gehäuserand wird nach wie vor über den elektropneumatischen Druckregler beaufschlagt, während das zweite Durchlaßventil über den mechanischen Druckregler angesteuert bzw. benutzt wird.

Die Erfindung wird anhand einiger Ausführungsbeispiele weiter erläutert und beschrieben. Es zeigen:
- Fig. 1: eine schematisierte Schnittdarstellung der Ausbildung eines einzelnen Überströmventils mit Betätigungseinheit,
- Fig. 2: eine zweite Ausführungsform des Überströmventils mit Elementen der Betätigungseinheit,
- Fig. 3: eine dritte Ausführungsform des Überströmventils mit Teilen der Betätigungseinheit und
- Fig. 4: eine vierte Ausführungsform des Überströmventils mit Betätigungseinheit.

In den Figuren ist jeweils ein einzelnes Überströmventil mit für das Verständnis erforderlichen Teilen dargestellt. Solche Überströmventile sind je nach der Anzahl der anzuschließenden und abzusichernden Kreise zu mehreren in einem gemeinsamen Gehäuse untergebracht, beispielsweise so, wie dies die Zeichnungen der DE 44 21 575 C2 für bis zu vier solcher Überströmventile mit zugeordneten Betätigungs- und Steuereinheiten erkennen lassen. Es ist also immer davon auszugehen, daß mindestens zwei derartige Überströmventile in einem gemeinsamen Gehäuse untergebracht und somit zwei Kreisen zugeordnet sind, damit der Begriff Mehrkreisschutzventil erfüllt ist.

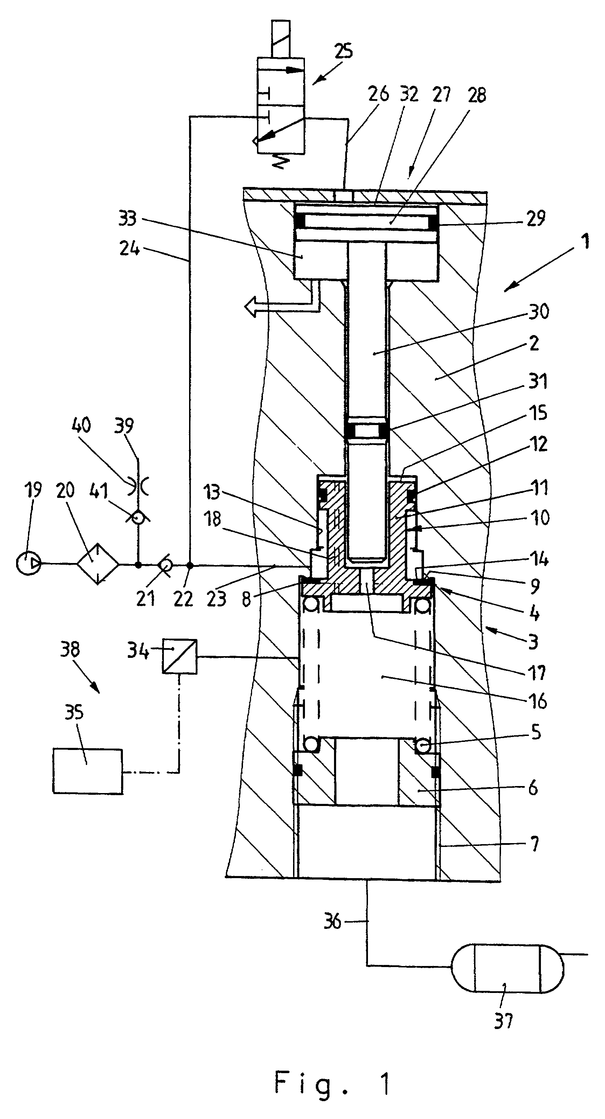

Fig. 1 zeigt also einen Ausschnitt aus einem Mehrkreisschutzventil 1 mit einem gemeinsamen Gehäuse 2, in welchem mindestens zwei Überströmventile 3 vorgesehen sind. Fig. 1 zeigt nur eines dieser beiden identisch ausgebildeten und angeschlossenen Überströmventile 3. Wesentliches Element eines solchen Überströmventils ist ein Ventilglied 4, das auf einer Feder 5 abgestützt ist. Die Kraft der Feder 5 kann durch ein Lager 6 veränderbar bzw. einstellbar sein, welches in einem Gewinde 7 verdrehbar angeordnet ist, so daß damit die Feder 5 mehr oder weniger vorspannbar und insoweit in ihrer Kraft einstellbar ist. Das Ventilglied 4 weist eine Dichtfläche 8 auf, die mit einem als Ventilsitz fungierenden Gehäuserand 9 ein Durchlaßventil 8, 9 bildet. Während das Ventilglied 4 im Stand der Technik als plattenförmiger Ventilkörper ausgebildet ist, ist hier das Ventilglied 4 als Differentialkolben 10 ausgebildet, der einen Fortsatz 11 aufweist, auf dem eine Kolbendichtung 12 angeordnet ist, die mit einer entsprechenden Zylinderbohrung 13 im Gehäuse 2 zusammenarbeitet. Das Ventilglied 4 bzw. der Differentialkolben 10 weist auf der der Feder 5 abgekehrten Seite eine erste Teilwirkfläche 14 auf. Diese erste Teilwirkfläche 14 ist eine Kreisringfläche entsprechend der Differenz der Durchmesser des als Ventilsitz fungierenden Gehäuserandes 9 und der Kolbendichtung 12. Diese erste Teilwirkfläche 14 ist daher sehr klein bemessen und beträgt nur einen Bruchteil der gesamten Wirkfläche des Ventilgliedes 4 bzw. des Differentialkolbens auf der der Feder 5 abgekehrten Seite. Von der Kolbendichtung 12 wird eine zweite Teilwirkfläche 15 bestimmt, die als Kreisfläche ausgebildet ist und die erheblich größer als die erste Teilwirkfläche 14 ist. Die Feder 5 ist in einem Federraum 16 jenseits des Durchlaßventils 8, 9 angeordnet. Über eine Durchbrechung 17 steht die zweite Teilwirkfläche 15 in dauernder Verbindung zu dem Federraum 16, so daß sich ein im Federraum 16 wirksamer Druck auch auf der Teilwirkfläche 15 auswirken kann. Mit anderen Worten ist der Differentialkolben 10 hinsichtlich seiner zweiten Teilwirkfläche 15 druckentlastet ausgebildet. Statt einer zentrischen Durchbrechung 17 kann auch ein exzentrisch angeordneter Kanal 18 vorgesehen sein, der durch gestrichelte Linien angedeutet ist. Der Kanal 18 kann entweder das Ventilglied 4 mit seinem Fortsatz 11 oder aber das Gehäuse 2 durchsetzen und die entsprechende Verbindung herstellen.

Es ist ein Kompressor 19 vorgesehen, der in bekannter Weise über einen oder mehrere Druckregler, von denen einer elektropneumatisch und ein anderer mechanisch ausgebildet ist, hinsichtlich der Lastlaufphase bzw. Leerlaufphase geschaltet wird. Der Kompressor 19 fördert die von ihm gelieferte Druckluft durch einen Trockner 20 über ein Rückschlagventil 21 in einen hier nur symbolhaft wiedergegebenen gemeinsamen Einströmraum 22 und damit zu den Überströmventilen 3 des Mehrkreisschutzventils 1. Über eine Leitung 23 beaufschlagt die Druckluft die erste Teilwirkfläche 14 des Differentialkolbens 10. Diese Druckluft steht als Steuerluft über eine Leitung 24 auch an einem Magnetventil 25 an, von dem eine Leitung 26 zu einer Betätigungseinheit 27 für das Überströmventil 3 führt. Die Betätigungseinheit 27 weist einen Kolben 28 mit Dichtung 29 und Stößel 30 auf. Der Stößel 30 besitzt eine Dichtung 31, damit sich der Druck des Federraums 16 auf der zweiten Teilwirkfläche 15 auswirken kann. Oberhalb des Kolbens 28 ist ein Wirkraum 32 im Gehäuse 2 gebildet, der über das Magnetventil 25 und die Leitung 26 mit Druckluft beaufschlagt werden kann. Ein Raum 33 unterhalb des Kolbens 28 ist an die Atmosphäre angeschlossen und damit entlüftet.

An den Federraum 16 ist ein Drucksensor 34 angeschlossen, also beispielsweise ein P/E-Wandler, der den Druck im Federraum 16 aufnimmt und in ein elektrisches Signal umwandelt, welches z. B. in einer gemeinsamen Elektronik 35 für sämtliche Überströmventile 3 und vorgesehene Kreise verarbeitet werden kann. Von dem Federraum 16 führt weiterhin eine Leitung 36 zu einem Vorratsbehälter 37, an dem in üblicher Weise ein Kreis mit seinem Luftverbraucher angeschlossen ist. So gesehen stellt der Vorratsbehälter 37 selbst einen Luftverbraucher dar. Wesentliche Elemente der Betätigungseinheit 27 sind also das Magnetventil 25, der Kolben 28 und der Stößel 30. Die Betätigungseinheit 27, der Drucksensor 34 und die gemeinsame Elektronik 35 bilden eine Steuereinheit 38. Es versteht sich, daß für jeden Kreis ein solches Überströmventil 3 mit zugeordneter Betätigungseinheit 27 und Drucksensor 34 vorgesehen ist, welches hinsichtlich der jeweiligen Steuereinheit 38 durch eine gemeinsame Elektronik 35, die zweckmäßig sämtlichen Kreisen zugeordnet ist, ergänzt wird.

Außerdem ist noch eine Rückführleitung 39 für eine Regenerationsphase des Trockners 20 vorgesehen. In der Rückführleitung 39 ist eine Drossel 40 und ein Rückschlagventil 41 vorgesehen, welches in der Lastlaufphase geschlossen ist.

Es ist erkennbar, daß die Kraft der Feder 5 relativ schwach bemessen sein kann, weil die erste Teilwirkfläche 14 durch die Anwendung eines Differentialkolbens 10 mit Kolbendichtung 12 auf relativ großem Durchmesser sehr klein gestaltet ist. Weiterhin kann die Wirkfläche des Kolbens 28 ebenfalls relativ klein gestaltet sein, wie es für das Aufdrücken des Durchlaßventils 8, 9, gesteuert durch die Elektronik 35 und das Magnetventil 25, erforderlich ist.

Die Funktion des Überströmventils 3 des Mehrkreisschutzventils 1 ist folgende. Sobald der Kompressor 19 in Tätigkeit gesetzt wird, wird der hier nicht dargestellte Druckregler eine Lastlaufphase einleiten, so daß Druckluft von dem Kompressor 19 über den Trockner 20 und das Rückschlagventil 21 in den Einströmraum 22 gelangt und damit auch die erste Teilwirkfläche 14 des Differentialkolbens 10 belastet. Die Größe der ersten Teilwirkfläche 14 und die vergleichsweise geringe Kraft der Feder 5 sind so aufeinander abgestimmt, daß das Durchlaßventil 8, 9 erst dann öffnet, wenn beispielsweise im Einströmraum 22 ein Druck von 10 bar erreicht und überschritten wird. Insoweit arbeitet das Überströmventil 3 damit als Sicherheitsventil. Das Durchlaßventil 8, 9 wird öffnen, und es wird Druckluft aus dem Einströmraum 22 in den Federraum 16 und damit in den Vorratsbehälter 37 einströmen. Das Durchlaßventil 8, 9 wird infolge des dann erfolgenden Druckabbaus im Einströmraum 22 wieder schließen. Der im Federraum 16 herrschende Druck wird auch die zweite Teilwirkfläche 15 belasten, so daß der Differentialkolben 10 insoweit druckentlastet ist. Sodann wird sich der Druck im Einströmraum 22 während der fortgesetzten Lastlaufphase wieder erhöhen,
wodurch ein weiterer Öffnungs- und Schließvorgang an dem Durchlaßventil 8, 9 stattfindet. Unabhängig von dieser Funktion als Sicherheitsventil kann aber auch das Durchlaßventil 8, 9 über die Betätigungseinheit 27 willkürlich gesteuert von der Elektronik 35 geöffnet werden. Dies kann auch dann geschehen, wenn der Druck im Einströmraum 22 noch geringer als 10 bar ist. Auf diese Weise kann ein ausgewählter Kreis bevorzugt befüllt werden. Von der Elektronik 35 wird ein Signal zu dem betreffenden Magnetventil 25 des betreffenden Kreises geschickt. Damit gelangt Druckluft über die Leitung 24 und die Leitung 26 in den Wirkraum 32 und damit auf die Wirkfläche des Kolbens 28, so daß über den Stößel 30 eine entsprechende Kraft auf den Differentialkolben 10 ausgeübt wird. Die Teile und die Dimensionierung ist derart gewählt, daß damit bereits das Durchlaßventil 8, 9 gegen die Kraft der schwach bemessenen Feder 5 geöffnet werden kann. Insoweit wird dann das Durchlaßventil 8, 9 offengehalten, so daß sich der im Einströmraum 22 aufbauende Druck unmittelbar auch in dem Vorratsbehälter 37 des betreffenden Kreises aufbauen kann. Dieser Druck wird über den Drucksensor 34 überwacht und der Elektronik 35 mitgeteilt, so daß dort jederzeit feststellbar ist, ob im Bereich des Vorratsbehälters 37 bzw. des daran angeschlossenen Kreises ein Defekt, beispielsweise ein Leck, vorliegt oder nicht. Liegt ein Leck vor, über welches Druckluft abströmt, dann wird sich dies auf den Druckaufbau im Vorratsbehälter 37 bzw. Federraum 16 auswirken, so daß der Drucksensor 34 dies feststellt. Selbstverständlich ist dieser Druckaufbau von der Größe des Lecks abhängig, so daß es erforderlich ist, die Elektronik 35 entsprechend auszubilden. Über einen Schwellwert der Druckanstiegsgeschwindigkeit kann zwischen einem Defekt und einem Nicht-Defekt unterschieden werden. Wird ein Defekt festgestellt, unterbleibt eine Ansteuerung des Magnetventils 25 in dem betreffenden Kreis, so daß der Differentialkolben 10 mit seinem Durchlaßventil 8, 9 nur noch als Sicherheitsventil wirkt. Das Durchlaßventil 8, 9 wird dann nur noch beispielsweise oberhalb von 10 bar öffnen, so daß damit gewährleistet ist, daß die anderen Überströmventile 3 und die daran angeschlossenen Kreise mindestens mit diesem Sicherheitsdruck von 10 bar aufgefüllt bzw. nachgefüllt werden können. Ist dagegen kein Defekt in dem betreffenden Kreis vorhanden oder der Defekt durch Reparatur beseitigt, so wird sich dies in einem entsprechenden Druckanstieg, gemessen durch den Drucksensor 34, bemerkbar machen, so daß der Elektronik 35 angezeigt wird, daß kein Defekt vorliegt, so daß dann die übliche Schaltungsphilosophie über die Elektronik 35 angewendet werden kann, beispielsweise eine bevorzugte Befüllung des einen Kreises gegenüber einem anderen Kreis.

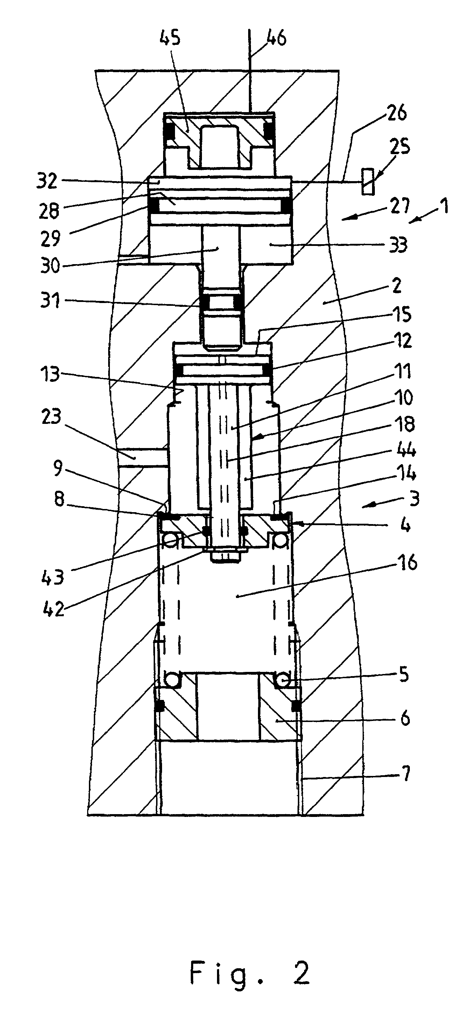

Fig. 2 zeigt ein weiteres Ausführungsbeispiel des Überströmventiles 3 mit zugeordneter Betätigungseinheit 27. Es müssen auch hier einzelne Elemente aus Fig. 1 ergänzt werden. Auf die Beschreibung des Ausführungsbeispiels der Fig. 1 kann verwiesen werden. Im Unterschied hierzu ist der Differentialkolben lediglich zweiteilig ausgebildet. Das Ventilglied 4 ist hier plattenartig ausgebildet und besitzt eine Durchbrechung, so daß hier aus diesem Teil der eine Teil des Differentialkolbens 10 gebildet wird. Der Fortsatz 11 ist Bestandteil des anderen Teils des Differentialkolbens, durch die Durchbrechung des Ventilgliedes 4 hindurchgeführt und mit einem Sicherungsring 42 kraftmäßig verbunden sowie über eine Dichtung 43 abgedichtet. Der Kanal 18 durchsetzt den Fortsatz 11 und dient der Druckentlastung der zweiten Teilwirkfläche 15. Der Fortsatz 11 ist von Rippen 44 umgeben, die an dem plattenförmigen Teil des Ventilgliedes 4 anschlagen und insoweit die Kraftübertragung in dieser Richtung sicherstellen, wenn die Betätigungseinheit 27 über das Magnetventil 25 betätigt wird. Zusätzlich zu dem Kolben 28 ist hier ein weiterer Kolben 45 vorgesehen, der gleichsinnig im gemeinsamen Gehäuse 2 untergebracht ist. Der weitere Kolben 45 ist über eine Leitung 46 beaufschlagbar und kann damit beispielsweise über einen mechanischen Druckregler (nicht dargestellt) im Gehäuse 2 angesteuert werden. Damit ist auch auf diese Art und Weise ein Öffnen des Durchlaßventiles 8, 9 in willkürlicher, d. h. gesteuerter Weise möglich.

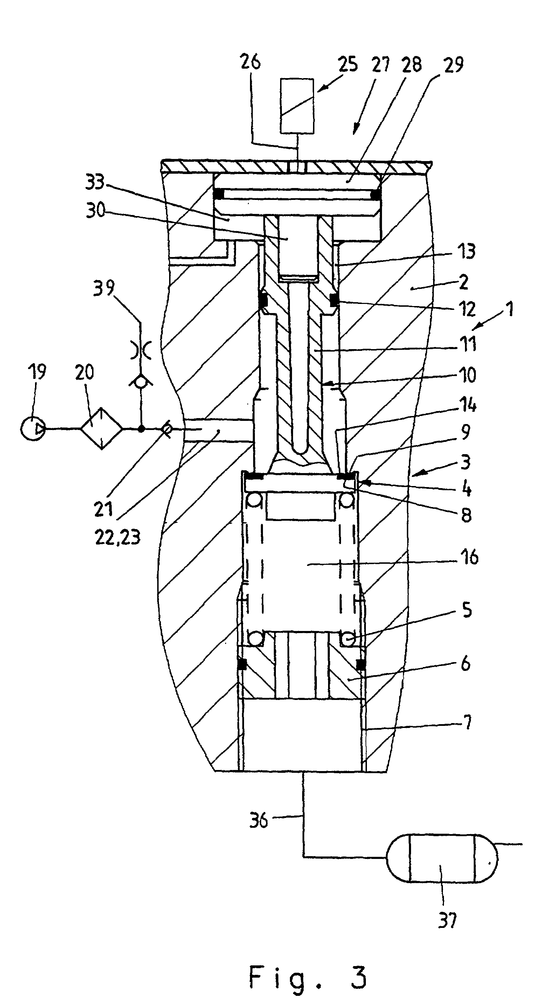

Das Ausführungsbeispiel der Fig. 3 greift ebenfalls auf das Ausführungsbeispiel gemäß Fig. 1 zurück. Der Differentialkolben 10 mit seinem Fortsatz 11 ist hier wiederum einstückig ausgebildet. Es fehlt jedoch die zweite Teilwirkfläche 15, die Durchbrechung 17 bzw. ein Kanal 18, so daß es diesbezüglich auch an einer Druckentlastung des Differentialkolbens 10 mangelt. Allerdings ist auch hier durch die Anordnung der Kolbendichtung 12 nahezu auf dem Durchmesser des Gehäuserandes 9 die Teilwirkfläche 14 mit sehr kleiner Fläche vorgesehen, um die Kraft der Feder 5 klein halten zu können. Die Betätigungseinheit 27 mit ihrem Kolben 28 und Stößel 30 stimmt mit der Ausführungsform gemäß Fig. 1 überein. Da jedoch die zweite Teilwirkfläche 15 fehlt, entfällt auch die Anordnung der Dichtung 31 auf dem Stößel 30.

Die insoweit fehlende Teilwirkfläche 15 muß bei der Dimensionierung der Wirkfläche des Kolbens 28 berücksichtigt werden. Der Kolben 28 muß also entsprechend größer dimensioniert werden, damit er bei Druckbeaufschlagung über das Magnetventil 25 in der Lage ist, willkürlich das Durchlaßventil 8, 9 zu öffnen bzw. offenzuhalten.

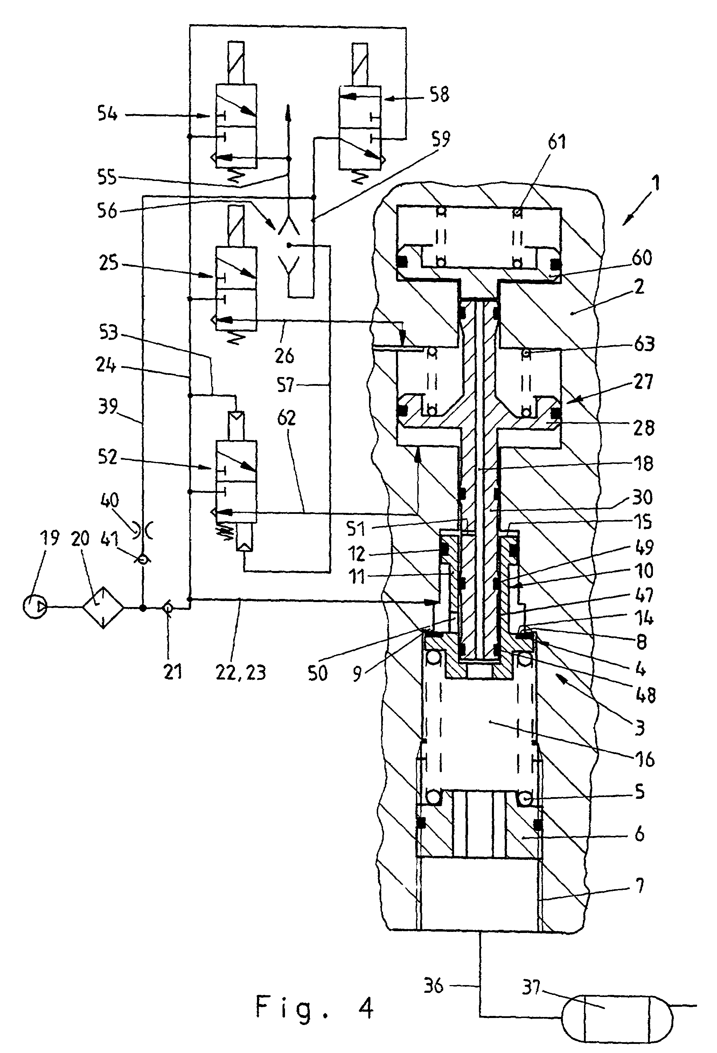

Bei der Ausführungsform gemäß Fig. 4 weist der Differentialkolben 10 eine Bohrung 47 auf, in welchem der Stößel 30 des Kolbens 28 mittels mehrerer Dichtungen 48 und 49 gleitend und dichtend gelagert ist. An die Bohrung 47 schließt eine radiale Durchbrechung 50 an, die in dauernder Verbindung mit dem Einströmraum 22 steht, über die auch die erste Teilwirkfläche 14 beaufschlagt wird. Der Boden des Ventilgliedes 4 ist durchbrochen, so daß über den im Stößel 30 vorgesehenen Kanal 18 und einen Abzweig 51 die zweite Teilwirkfläche 15 des Differentialkolbens druckentlastet ausgebildet ist. Die Dichtung 48 bildet in Verbindung mit der Bohrung 47 ein zweites Durchlaßventil 47, 48, welches dann geöffnet wird, wenn der Kolben 28 auf seiner Unterseite beaufschlagt wird, so daß er einen nach oben gerichteten Hub ausübt.

Der hier nicht näher dargestellte mechanisch pneumatische Druckregler weist ein mechanisch-pneumatisches Steuerventil 52 auf, welches auf der einen Seite über eine Leitung 53 Verbindung zu dem gemeinsamen Einströmraum 22 hat. Der elektrische Druckregler (nicht dargestellt) weist ein elektrisches Magnetventil 54 auf, welches ebenfalls von der Elektronik 35 geschaltet wird und in der Leerlaufphase erregt ist. In dieser Leerlaufphase wird über das Magnetventil 54 und einer Leitung 55 Druckluft aus dem Einströmraum 22 zu einem Zweiwegeventil 56 ausgesteuert, dessen Ausgangsleitung 57 zu der anderen Seite des mechanisch-pneumatischen Steuerventils 52 geführt ist. Damit ist sichergestellt, daß das Steuerventil 52 in der Leerlaufphase auf beiden Seiten gleich beaufschlagt wird, also in der in Figur 4 dargestellten Stellung verbleibt, so daß der Raum unterhalb des Kolbens 28 entlüftet ist.

Weiterhin ist ein Magnetventil 58 für die Regeneration des Trockners 20 vorgesehen. Diese Magnetventil 58 befindet sich in der Leerlaufphase in der dargestellten Stellung. In der Lastlaufphase wird das Magnetventil 58 erregt, so daß es Druckluft aus dem gemeinsamen Einströmraum 22 in eine Leitung 59 aussteuert, die zu dem Zweiwegeventil 56 führt. An die Leitung 59 ist auch die Rückflußleitung 39 angeschlossen. Das Rückschlagventil 41 erfüllt hier seine Sperrfunktion. Auch das Steuerventil 52 verbleibt in der dargestellten Stellung.

Dem Kolben 28 der Betätigungseinheit 27 ist ein Sperrkolben 60 zugeordnet, der auf einer Feder 61 abgestützt ist. Der Sperrkolben 60 wird über den Kanal 18 von dem Druck im Federraum 16 und damit im Vorratsbehälter 37 beaufschlagt. Liegt in dem Kreis, der an den Vorratsbehälter 37 angeschlossen ist, kein Defekt vor, dann ist der Sperrkolben 60 gegen die Kraft der Feder 61 angehoben. Liegt dagegen ein Defekt vor, dann befindet sich der Sperrkolben in der in Figur 4 dargestellten Stellung. Wenn im elektrischen Teil der Anlage ein Defekt vorliegt und insoweit das mechanisch-pneumatische Steuerventil 52 des mechanisch-pneumatischen Druckreglers die Schaltfunktion ausübt, wird zwar die Druckluft über eine Leitung 62 von dem Steuerventil 52 unter den Kolben 28 der Betätigungseinheit 27 geschickt. Der Sperrkolben 60 verhindert jedoch bei einem Defekt in dem an den Vorratsbehälter 37 angesteuerten Verbraucherkreis ein Öffnen des zweiten Durchlaßventils 47, 48. Ist dagegen in dem an dem Vorratsbehälter 37 angeschlossenen Kreis kein Defekt vorhanden, dann findet hier ein Druckaufbau statt und der Sperrkolben 60 befindet sich in der angehobenen Stellung, so daß er entsprechende Reaktionen des Steuerventils 52 auf den Kolben 28 nicht unterbindet. Der Kolben 28 ist auf einer Feder 63 abgestützt, die als schwache Feder lediglich so bemessen sein muß, daß sie die Reibungen der Dichtungen auf dem Stößel 30 und der Dichtung 29 auf dem Kolben 28 überwinden kann. Wenn der Kolben 28 beidseitig entlüftet ist, ist die Feder 63 in der Lage, die Schließstellung des zweiten Durchlaßventils 47, 48 herbeizuführen. Die gemeinsame Elektronik 36 steuert das Magnetventil 25, das Magnetventil 54 und das Magnetventil 58. Es versteht sich, daß jedes Überströmventil 3 in dieser Weise angeschlossen ist und gesteuert wird, wie dies anhand eines Überströmventiles 3 in Figur 4 verdeutlicht ist.

### BEZUGSZEICHENLISTE

- 1 -: Mehrkreisschutzventil
- 2 -: Gehäuse
- 3 -: Überströmventil
- 4 -: Ventilglied
- 5 -: Feder
- 6 -: Lager
- 7 -: Gewinde
- 8 -: Dichtfläche
- 9 -: Gehäuserand
- 10 -: Differentialkolben

- 11 -: Fortsatz
- 12 -: Kolbendichtung
- 13 -: Zylinderbohrung
- 14 -: erste Teilwirkfläche
- 15 -: zweite Teilwirkfläche
- 16 -: Federraum
- 17 -: Durchbrechung
- 18 -: Kanal
- 19 -: Kompressor
- 20 -: Trockner

- 21 -: Rückschlagventil
- 22 -: Einströmraum
- 23 -: Leitung
- 24 -: Leitung
- 25 -: Magnetventil
- 26 -: Leitung
- 27 -: Betätigungseinheit
- 28 -: Kolben
- 29 -: Dichtung
- 30 -: Stößel

- 31 -: Dichtung
- 32 -: Wirkraum
- 33 -: Raum
- 34 -: Drucksensor
- 35 -: Elektronik
- 36 -: Leitung
- 37 -: Vorratsbehälter
- 38 -: Steuereinheit
- 39 -: Rückflußleitung
- 40 -: Drossel

- 41 -: Rückschlagventil
- 42 -: Sicherungsring
- 43 -: Dichtung
- 44 -: Rippe
- 45 -: weiterer Kolben
- 46 -: Leitung
- 47 -: Bohrung

- 48 -: Dichtung
- 49 -: Dichtung
- 50 -: radiale Durchbrechung

- 51 -: Abzweig
- 52 -: Steuerventil
- 53 -: Leitung
- 54 -: Magnetventil
- 55 -: Leitung
- 56 -: Zweiwegeventil
- 57 -: Ausgangsleitung

- 58 -: Magnetventil
- 59 -: Leitung
- 60 -: Sperrkolben

- 61 -: Feder
- 62 -: Leitung
- 63 -: Feder

## Patentansprüche

1. Mehrkreisschutzventil (1) für Druckluftbeschaffungsanlagen von Kraftfahrzeugen, mit mindestens zwei je einem Kreis zugeordneten Überströmventilen (3), die jeweils ein auf einer Feder (5) abgestütztes Ventilglied (4) aufweisen, das mit einem Ventilsitz ein Durchlaßventil (8, 9) für die Druckluft zu einem dem Kreis zugeordneten Luftverbraucher bildet, und mit je einer dem Kreis zugeordneten Steuereinheit (38) zum gesteuerten Öffnen des Durchlaßventils (8, 9), die eine Betätigungseinheit (27) aufweist, wobei die Betätigungseinheit (27) einen Kolben (28) und einen Stößel (30) aufweist, **dadurch gekennzeichnet, daß** das Ventilglied (4) jedes Überströmventils (3) als Differentialkolben (10) mit Kolbendichtung (12) ausgebildet ist, daß die von der zugeführten Druckluft beaufschlagte Wirkfläche auf der der Feder (5) abgekehrten Seite des Ventilgliedes (4) durch die Kolbendichtung (12) zu einer Teilwirkfläche (14) reduziert ist, und daß die Kraft der Feder (5) entsprechend dem gewünschten Öffnungsdruck des Überströmventils (3) auf diese reduzierte Teilwirkfläche (14) dimensioniert ist.

2. Mehrkreisschutzventil nach Anspruch 1, **dadurch gekennzeichnet, daß** die Wirkfläche auf der der Feder (5) abgekehrten Seite des Ventilgliedes (4) durch die Kolbendichtung (12) in eine erste reduzierte Teilwirkfläche (14) und in eine zweite Teilwirkfläche (15) unterteilt ist, wobei die erste Teilwirkfläche (14) von der dem Mehrkreisschutzventil (1) zugeführten Druckluft und die zweite Teilwirkfläche (15) von der dem Luftverbraucher zugeführten Druckluft beaufschlagt ist.

3. Mehrkreisschutzventil nach Anspruch 1 oder 2, **dadurch gekennzeichnet, daß** der Differentialkolben (10) auf der der Feder (5) abgekehrten Seite eine Dichtfläche (8) aufweist, die mit einem Gehäuserand (9) das Durchlaßventil (8, 9) bildet, und daß der Differentialkolben (10) auf der der Feder (5) abgekehrten Seite einen Fortsatz (11) aufweist, auf dem die Kolbendichtung (12) angeordnet ist.

4. Mehrkreisschutzventil nach Anspruch 3, **dadurch gekennzeichnet, daß** der Differentialkolben (10) ein- oder mehrstückig ausgebildet ist und eine Durchbrechung (17) für die Druckentlastung der zweiten Teilwirkfläche (15) aufweist.

5. Mehrkreisschutzventil nach Anspruch 2, **dadurch gekennzeichnet, daß** die zweite Teilwirkfäche (15) größer als die erste Teilwirkfläche (14) ausgebildet ist.

6. Mehrkreisschutzventil nach Anspruch 1, **dadurch gekennzeichnet, daß** die Betätigungseinheit (27) einen zweiten gleichsinnig zum Kolben (28) angeordneten weiteren Kolben (45) aufweist.

7. Mehrkreisschutzventil nach einem der Ansprüche 1 bis 6, **dadurch gekennzeichnet, daß** der Differentialkolben (10) eine zentrische Bohrung (47) aufweist, daß der Stößel (30) der Betätigungseinheit (27) in die Bohrung (47) einragt und mit einer Dichtung (48) in dem Differentialkolben (10) verschiebbar gelagert ist.

8. Mehrkreisschutzventil nach Anspruch 7, **dadurch gekennzeichnet, daß** der Fortsatz (11) des Differentialkolbens (10) im Anschluß an die Bohrung (47) eine radiale Durchbrechung (50) aufweist, die in dauernder Verbindung zu der ersten Teilwirkfläche (14) steht.

9. Mehrkreisschutzventil nach Anspruch 6 und 7, **dadurch gekennzeichnet, daß** der Kolben (28) der Betätigungseinheit (27) auf der einen Seite über ein Magnetventil (25) und auf der anderen Seite über ein Steuerventil (52) des elektro-pneumatischen Druckreglers beaufschlagbar ist.

10. Mehrkreisschutzventil nach den Ansprüchen 6 bis 9, **dadurch gekennzeichnet, daß** dem Kolben (28) der Betätigungseinheit (27) eine auf einer Feder (61) abgestützter Sperrkolben (60) zugeordnet ist, der auf seiner Wirkfläche von dem Druck im Federbaum (16) beaufschlagt ist.

## Claims

1. A multi circuit protection valve (1) for compressed air supply systems of motor vehicles, including at least two overflow valves (3) each being associated with one circuit, the overflow valves (3) each including a valve member (4) being supported on a spring (5), the valve member (4) with a valve seat forming a passage valve (8, 9) for the compressed air to an air consumer being associated with the circuit, and each including a control unit (38) being associated with the circuit for opening the passage valve (8, 9) in a controlled way, the control unit (38) including an actuation unit (27) including a piston (28) and a rod (30), **characterised in that** the valve member (4) of each overflow valve (3) is designed as a differential piston (10) including a piston seal (12), that the effective surface being subjected by the delivered compressed air at the side of the valve member (4) facing away from the spring (5) is reduced to a partial effective surface (14) by the piston seal (12), and that the force of the spring (5) is dimensioned as it corresponds to the desired opening pressure of the overflow valve (3) onto the reduced partial effective surface (14).

2. The multi circuit protection valve of claim 1, **characterised in that** the effective surface of the valve member (4) at the side facing away from the spring (5) is divided into a first reduced partial effective surface (14) and a second partial effective surface (15) by the piston seal (12), the first partial effective surface (14) being subjected by the compressed air delivered to the multi circuit protection valve (1) and the second partial effective surface (15) being subjected by the compressed air being delivered to the air consumer.

3. The multi circuit protection valve of claim 1 or 2, **characterised in that** the differential piston (10) at the side facing away from the spring (5) includes a sealing surface (8) which forms the passage valve (8, 9) with a housing rim (9), and that the differential piston (10) at the side facing away from the spring (5) includes a protrusion (11) on which the piston seal (12) is arranged.

4. The multi circuit protection valve of claim 3, **characterised in that** the differential piston (10) is designed as one piece or as a plurality of pieces and includes an opening (17) for the pressure relief of the second partial effective surface (15).

5. The multi circuit protection valve of claim 2, **characterised in that** the second partial effective surface (15) is more than the first partial effective surface (14).

6. The multi circuit protection valve of claim 1, **characterised in that** the actuation unit (27) includes an additional second piston (45) in addition to and in the same sense as the piston (28).

7. The multi circuit protection valve of one of claims 1 through 6, **characterised in that** the differential piston (10) includes a centric bore (47), that the rod (30) of the actuation unit (27) protrudes into the bore (47) and it is movably supported in the differential piston (10) with a seal (48).

8. The multi circuit protection valve of claim 7, **characterised in that** the protrusion (11) of the differential piston (10) next to the bore (47) includes a radial opening (50) being permanently connected to the first partial effective surface (14).

9. The multi circuit protection valve of claim 6 or 7, **characterised in that** the piston (28) of the actuation unit (27) at one side is subjectable via a solenoid valve (25) and at the other side is subjectable via a control valve (42) of the electro-pneumatic pressure sensor.

10. The multi circuit protection valve of claims 6 through 9, **characterised in that** a locking piston (60) being supported on a spring (61) is associated with the piston (28) of the actuation unit (27), the locking piston (60) at its effective surface being subjected by the pressure in the spring room (16).

## Revendications

1. Soupape de protection multicircuit (1) pour installations de production d'air comprimé de véhicules automobiles, comportant au moins deux soupapes de décharge (3) affectées chacune à un circuit et qui comportent chacune un organe de soupape (4) qui est soutenu sur un ressort et qui forme, avec un siège de soupape, une soupape de passage (8, 9) pour l'air comprimé vers un récepteur d'air associé au circuit, et comportant une unité de commande (38) associée au circuit pour l'ouverture commandée de la soupape de passage (8, 9), laquelle unité de commande comporte une unité d'actionnement (27), l'unité d'actionnement (27) comportant un piston (28) et un poussoir (30), **caractérisée en ce que** l'organe de soupape (4) de chaque soupape de décharge (3) est réalisé en tant que piston différentiel (10) avec garniture d'étanchéité (12) du piston, **en ce que** la surface active, soumise à l'action de l'air comprimé amené, est réduite sur le côté de l'organe de soupape (4) opposé au ressort (5), par la garniture d'étanchéité de piston (12) en une surface active partielle (14), et **en ce que** la force du ressort (5) est dimensionnée en fonction de la pression d'ouverture voulue de la soupape de décharge (3) sur cette surface active partielle (14) réduite.

2. Soupape de protection multicircuit selon la revendication 1, **caractérisée en ce que** la surface active sur le côté de l'organe de soupape (4) tourné à l'opposé du ressort (5), est divisée, par la garniture d'étanchéité de piston (12), en une première surface active partielle (14) réduite et une deuxième surface active partielle (15), la première surface active partielle (14) étant sollicitée par l'air comprimé amené à la soupape de protection multicircuit (1), et la deuxième surface active partielle (15) étant sollicitée par l'air comprimé amené au récepteur d'air.

3. Soupape de protection multicircuit selon la revendication 1 ou 2, **caractérisée en ce que** le piston différentiel (10) comporte, sur le côté tourné à l'opposé du ressort (5), une surface d'étanchéité (8) qui forme, avec un bord de boîtier (9), la soupape de passage (8, 9) et **en ce que** le piston différentiel (10) comporte, sur le côté tourné à l'opposé du ressort (5), un prolongement (11) sur lequel est disposée la garniture d'étanchéité de piston (12).

4. Soupape de protection multicircuit selon la revendication 3, **caractérisée en ce que** le piston différentiel (10) est réalisé en une ou plusieurs pièces et présente un ajour (17) pour la décharge de pression de la deuxième surface active partielle (15).

5. Soupape de protection multicircuit selon la revendication 2, **caractérisée en ce que** la deuxième surface active partielle (15) est plus grande que la première surface active partielle (14).

6. Soupape de protection multicircuit selon la revendication 1, **caractérisée en ce que** l'unité d'actionnement (27) comporte un deuxième piston (45) complémentaire disposé dans le même sens que le piston (28).

7. Soupape de protection multicircuit selon l'une des revendications 1 à 6, **caractérisée en ce que** le piston différentiel (10) présente un trou (47) centré, **en ce que** le poussoir (30) de l'unité d'actionnement (27) s'engage dans le trou (47) et est monté, avec une garniture d'étanchéité (48), de manière à pouvoir coulisser dans le piston différentiel (10).

8. Soupape de protection multicircuit selon la revendication 7, **caractérisée en ce que** le prolongement (11) du piston différentiel (10) présente, à la suite du trou (47), un ajour radial (50) qui est en liaison permanente avec la première surface active partielle (14).

9. Soupape de protection multicircuit selon les revendications 6 et 7, **caractérisée en ce que** le piston (28) de l'unité d'actionnement (27) peut être sollicité sur un côté par une soupape magnétique (25) et sur l'autre côté, par une soupape de commande (52) du régulateur de pression électropneumatique.

10. Soupape de protection multicircuit selon les revendications 6 à 9, **caractérisée en ce qu'**au piston (28) de l'unité d'actionnement (27) est associé un piston d'arrêt (60) soutenu sur un ressort (61) et qui est sollicité, sur sa surface active, par la pression régnant dans l'espace (16) du ressort.
